# EUROPEAN PATENT APPLICATION

(11) **EP 2 662 969 A1**
(43) Date of publication of application: **13.11.2013**
(21) Application number: 12166984.0
(22) Date of filing: 07.05.2012
(51) Int. Cl.: H02M 7/49, H02M 7/487

(54) **Multi-phase multi-level converter**

(71) Applicant: ABB Technology AG, 8050 Zürich (CH)
(72) Inventor: Zuckerberger, Adrian, 5417 Untersiggenthal (CH); Suter, Erich, 5423 Freienwil (CH)
(74) Representative: ABB Patent Attorneys

(57) **Abstract**

A multi-phase multi-level converter 10 for converting a multi-phase input voltage from an electrical grid into a multi-phase multi-level output voltage to be supplied to a load comprises a transformer 12 with a primary side connected to the electrical grid and at least three floating cells 16a, 16b, 16c connected to the secondary side of the transformer 12. Each floating cell 16a, 16b, 16c comprises a rectifier 18a, 18b, 18c, a DC link 20a, 20b, 20c and an inverter 22a, 22b, 22c. The rectifier 18a, 18b, 18c is supplied by the secondary of the transformer 12. The DC link 20a, 20b, 20c interconnects the rectifier 18a, 18b, 18c and the inverter 22a, 22b, 22c. The inverter 22a, 22b, 22c generates a phase of the multi-phase multi-level output voltage. The inverter 22a, 22b, 22c comprises a first inverter leg 24a, 24b, 24c and a second inverter leg 26a, 26b, 26c connected in H-bridge topology. The first inverter leg 24a, 24b, 24c and the second inverter leg 26a, 26b, 26c are active neutral point clamped inverter legs.

## Description

### FIELD OF THE INVENTION

The invention relates to the field of medium voltage drives. In particular, the invention relates to a multi-phase multi-level converter for converting a multi-phase input voltage from an electrical grid into a multi-phase multi-level output voltage.

### BACKGROUND OF THE INVENTION

Medium voltage drives are used in the industry for a lot of purposes. In particular, the heavy industry requires more and more advanced process control, covering the range of 1 to 60 MVA (and more) with voltages of 2.3 to 10 kV.

Besides an electrical motor, a medium voltage drives usually comprises a converter that generates the AC voltage for the electrical motor from an AC voltage of an electrical grid. Known topologies are direct-to-line converters in which the motor is directly supplied from a medium voltage network, converters with multi-pulse transformers feeding via diode bridges one or more galvanic interconnected DC-links and converters with multi-pulse transformers feeding via diode bridges multi floating DC-links.

### DESCRIPTION OF THE INVENTION

The object of the invention is to provide an alternative solution to these converter topologies.

This objective is achieved by the subject-matter of the independent claims. Further exemplary embodiments are evident from the dependent claims and the following description.

An aspect of the invention relates to a multi-phase multi-level converter for converting a multi-phase input voltage (for example with constant frequency) from an electrical grid into a multi-phase multi-level output voltage (for example with variable frequency) to be supplied to a load, which may be a motor. In particular, the converter may be a medium voltage converter, for example operating between 1kV and 20kV.

According to an embodiment of the invention, the converter comprises a transformer with a primary side connected to the electrical grid and at least three floating cells connected to the secondary side of the transformer. Each floating cell comprises a rectifier, a DC link and an inverter, wherein the rectifier is supplied by the secondary side of the transformer, the DC link interconnects the rectifier and the inverter, and the inverter generates a phase of the multi-phase multi-level output voltage.

Note that the converter may comprise more than three floating cells (for example 6) and that a floating cell may be "floating" when not being connected to the ground potential or a common reference potential. "Floating" may mean "galvanically isolated".

Furthermore, the DC-links of the floating cells may be galvanically isolated from each other.

According to an embodiment of the invention, as a basic building block, the inverter comprises a first and a second inverter leg connected in H-bridge topology and the first and second inverter legs are active neutral point clamped inverter legs, in a so called five level topology.

Due to the usage of active neutral point clamped inverter legs, the inverter may have a 9 level phase output voltage and a 17 level line-to-line output voltage, which is nearly sinusoidal.

Furthermore, due to the design of the converter with the floating cells, the output voltage and output power of the converter may be relative high.

According to an embodiment of the invention, the secondary side of the transformer supplies each floating cell with a 12 pulse voltage. This may provide a nearly constant voltage to the DC-link, with only low ripples. Seen from the primary side, the system is a 36 pulse system.

According to an embodiment of the invention, the DC link comprises two capacitors connected in series for providing a positive DC voltage, a neutral point connection and a negative DC voltage to the inverter. The capacitors may be galvanically isolated from the capacitors of another DC-link.

According to an embodiment of the invention, outputs of the first inverter legs of the floating cells are connected to a common point and/or outputs of the second inverter legs of the floating cells provide output phases connectable to the load. In such a way, the interconnected inverters may generate the three phase 17 level output voltage.

As already mentioned, the inverter legs of the converter are active neutral point clamped inverter legs. The inverter legs may comprise a floating phase capacitor. The floating (phase) capacitor may be interconnected between a first inverter cell generating a first multi-level output voltage and a second inverter cell using the floating capacitor to generate a second output voltage from the first multi-level output voltage with even more levels. The topology of an active neutral point clamped inverter leg with the floating capacitor creates a 5 level phase voltage.

Unlike classical five-level topologies, active neutral point clamped inverter legs may split the DC-link into only two capacitors and may require only one single floating capacitor.

According to an embodiment of the invention, at least one of the first and second inverter legs comprises a first inverter cell with two upper semiconductor switch elements connecting a positive output of the DC-link with a neutral point and two lower semiconductor switch elements connecting a negative output of the DC-link with the neutral point. In such a way, the first inverter cell may be adapted for generating a three level output current.

According to an embodiment of the invention, each semiconductor switch element of the first inverter cell comprises two distinct semiconductor switches, which may be connected in series. This may permit to use standard 4.5 kV elements in a topology operated from a 10 kV DC-link.

According to an embodiment of the invention, the first inverter cell is adapted for generating a three level output voltage between an upper and lower output located between the two upper semiconductor switch elements and the two lower semiconductor switch elements. The outputs of first inverter cell may be the inputs of a second inverter cell and a third inverter cell that are interconnected via the floating capacitor.

According to an embodiment of the invention, at least one of the first and second inverter leg comprises a second inverter cell with an upper semiconductor switch element connecting an upper output of a first cell of the inverter leg with a floating phase capacitor and an lower semiconductor switch element connecting a lower output of a first inverter cell of the inverter leg with the phase capacitor.

According to an embodiment of the invention, at least one of the first and second inverter legs comprises a third inverter cell with two semiconductor switch elements connected in series and connected in parallel to a phase capacitor. The point between the two semiconductor switch elements may be the output of the inverter leg.

According to an embodiment of the invention, the first and second inverter legs comprises IGBTs as semiconductor switches, which may be operated in series connection and/or as a single switching device.

According to an embodiment of the invention, a clamping circuit is interconnected between the DC-link and the first and/or second inverter leg, such that semiconductor switches of the first and/or second inverter leg turn-on with limited current gradient and/or turn off at limited voltage stress. In other words, the clamping circuit may be used for switching the semiconductor switches in a smooth way, thus protecting semiconductor switches and reducing switching losses.

With such a clamping circuit, the performance of the inverters and the inverter legs may be enhanced. Also turn-off switching losses may be lower for some of the semiconductor switches.

According to an embodiment of the invention, the clamping circuit comprises a clamp inductor interconnecting an output of the DC-link with the first and/or second inverter leg. The clamping circuit may further comprise a clamp diode and a clamp capacitor connected in series and connecting an output of the clamp inductor with the neutral point.

According to an embodiment of the invention, the clamping circuit comprises a clamp resistor directly connecting the clamp capacitor with the output of the DC-link.

According to an embodiment of the invention, the clamping circuit comprises two clamp inductors interconnecting the first inverter leg and second inverter leg with the positive and negative outputs of the DC-link. The clamp inductors may be shared by the inverter legs. In particular, the clamp diodes and the clamp capacitors of the two inverter legs may be operated on a common inductor to minimize the losses, cost and failure current.

According to an embodiment of the invention, the clamping circuit comprises a clamp diode, a clamp capacitor and/or a clamp resistor for each positive and negative half of each of the first and second inverter leg. Each positive and negative input of the inverter legs may be connected to the DC-link via the clamping circuit.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.

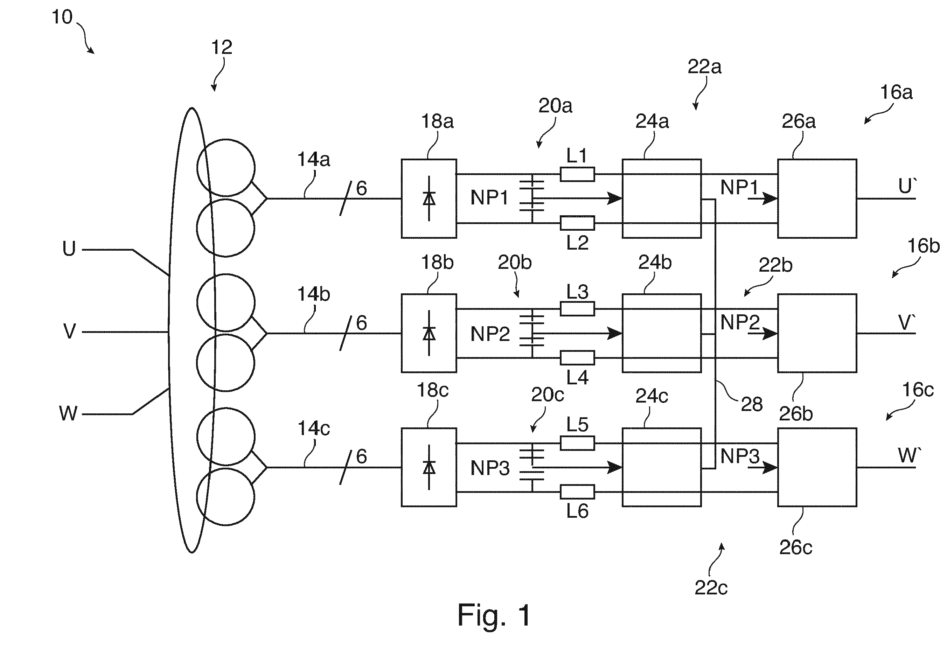

Fig. 1 shows a circuit diagram of a converter according to an embodiment of the invention.
Fig. 2 shows a circuit diagram of an inverter according to an embodiment of the invention.

In principle, identical parts are provided with the same reference symbols in the figures.

### DETAILED DESCRIPTION OF EXEMPLARY EMBODIMENTS

Fig. shows a multi-phase multi-level converter 10 with a transformer 12 for connecting the converter 10 to an electrical grid.

The transformer 12 has three phases U, V, W at the primary side and 18 phases at the secondary side. Thus, the transformer is a 36 pulse transformer 12. The 18 phases at the secondary side are grouped into three six-phase (12 pulse) inputs 14a, 14b, 14c.

The converter 10 comprises further three floating cells 16a, 16b, 16c, each of which is supplied by one of the inputs 14a, 14b, 14c. Each of the floating cells 16a, 16b, 16c provides one of the output phases U', V', W' of the converter 10, that may be connected to a three phase load, for example an induction motor or synchronous motor.

The three floating cells 16a, 16b, 16c are equally or identically designed. Each of the floating cells 16a, 16b, 16c comprises a floating 12 pulse rectifier 18a, 18b 18c, a floating DC link 20a, 20b ,20c and a floating inverter 22a, 22b, 22c.

The DC-links 18a, 18b, 18c are galvanically decoupled. Each DC-link 18a, 18b, 18c comprises two floating capacitors and provides a positive, a negative and a neutral point connection NP1, NP2, NP3 to the respective inverter 22a, 22b, 22c.

Each inverter 22a, 22b, 22c is interconnected via two clamp inductors L1, L2 (L3, L4, L5, L6) with the respective DC-link 18a, 18b, 18c.

The inverters 22a, 22b, 22c are equally designed. Each of the inverters 22a, 22b, 22c comprises a first inverter leg 24a, 24b, 24c and a second inverter leg 26a, 26b, 26c. The outputs of the first inverter legs 24a, 24b, 24c are interconnected via a common point 28. The outputs of the second inverter legs 26a, 26b, 26c provide the three output phases U', V', W'.

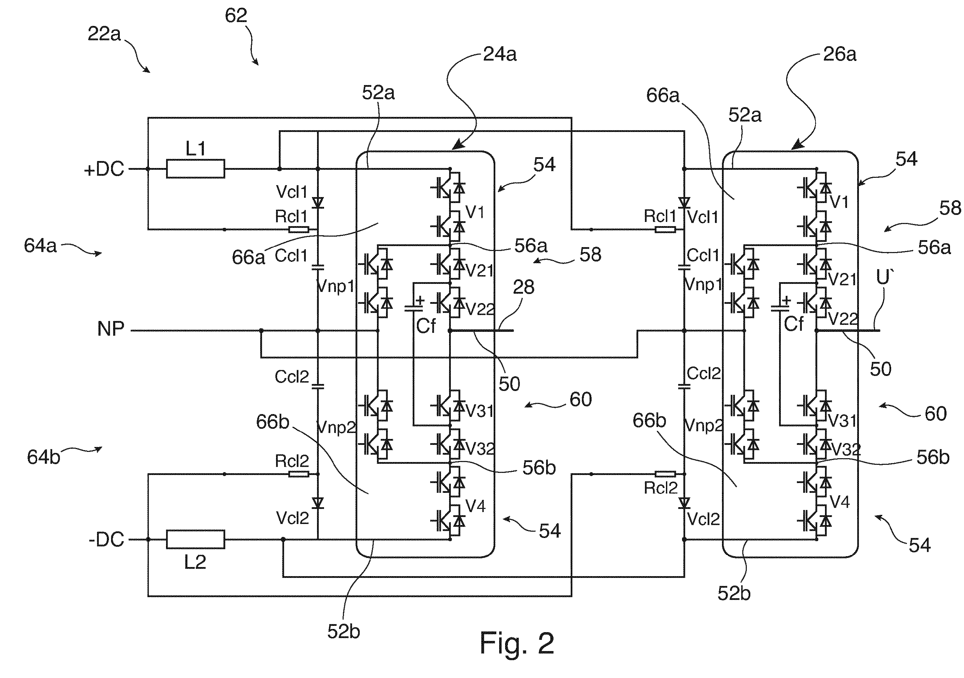

Fig. 2 shows the inverter 22a in detail. The two other inverters 22b, 22c are equally designed.

The inputs of the inverter 22a are the positive connection DC+, the negative connection DC- and the neutral point connection NP to the DC-link 20a. The outputs of the inverter 22a are the connection to the common point 28 provided by the output 50 of the first inverter leg 24a and the output phase U' provided by the output 50 of the second inverter leg 26a.

The inverter legs 24a, 26a are equally designed. The positive inputs 52a of the inverter legs 24a, 26a are connected via the clamping inductor L1 to the positive connection DC+ and the negative inputs 52b are connected via the clamping inductor L2 to the negative connection DC-.

The inverter legs 24a, 26a are active neutral-point clamped (ANPC). Each of the inverter legs 24a, 26a comprises a first inverter cell 54 (comprising V1, Vnp1, Vnp2, V4) for generating a three level output at the points 56a, 56b, a second inverter cell 58 (comprising V21, V32) and a third inverter cell 60 (comprising V22, V31).

The first inverter cell 54 comprises two upper semiconductor switch elements V1, Vnp1 connecting the positive output DC+ of the DC-link 20a with the neutral point NP and two lower semiconductor switch elements V4, Vnp2 connecting the negative output DC- of the DC-link 20a with the neutral point NP. The first inverter cell 54 is adapted for generating a three level output voltage between the upper output 56a and the lower output 56b, which are located between the two upper semiconductor switch elements V1, Vnp1 and the two lower semiconductor switch elements V4, Vnp2.

The second inverter cell 58 comprises an upper semiconductor switch element V21 connecting the upper output 56a of the first inverter cell 56a with a floating phase capacitor Cf and a lower semiconductor switch element V32 connecting the lower output 56b of the first inverter cell 54 with the phase capacitor Cf.

The third inverter cell 60 comprises two semiconductor switch elements V22, V31 connected in series and connected in parallel to the phase capacitor Cf. The output 50 of the inverter leg 24a, 26a is provided between the semiconductor switch elements V22, V31.

Each semiconductor switch element V1, V4, Vnp1, Vnp2 of the first inverter cell 54 comprises two distinct semiconductor switches. The semiconductor switch elements V21, V22, V31, V33 of the second cell 58 and the third cell 60 only comprise one semiconductor switch. The semiconductor switches all may be IGBTs.

Each of the inverter legs 24a, 26a produces five distinct output voltage levels at the output 50 by combining the three-level characteristic of the input stage of the first inverter cell 54 with the two-level of the output parts of the second inverter cell 58 and the third inverter cell 60.

As each inverter leg 24a, 26a is adapted for generating a 5 level output voltage (i.e. two positive voltages, two negative voltages and one neutral voltage), the inverter 22a in H-bridge topology is adapted to generate a 9 level output voltage (two times the two positive and two negative voltages and one neutral voltage). Thus, the output voltage at the outputs U', V', W' is a 17 level line-to-line output voltage, which is nearly a sinusoidal waveform.

The inverter 22a and in particular the inverter legs 24a, 26a are connected via an clamping circuit 62 to the DC-link 22a.

The clamping circuit 62 comprises a clamp inductor L1, L2 for each upper half 64a and lower half 64 b of the inverter 22a and a clamp diode Vcl1, Vcl2, a clamp capacitor Ccl1, Ccl2 and a clamp resistor Rcl1, Rcl2 for each upper half 66a and lower half 66b of the two inverter legs 24a, 26a. In other words, the clamping circuit 62 is symmetrically realized.

In such a way the clamping circuit 62 comprises two inductors L1, L2, four clamp diodes Vcl1, Vcl2, four clamp capacitors Ccl1, Ccl2 and four clamp resistors Rcl1, Rcl2.

For each half 66a, 66b of one of the inverter legs 24a, 26a, the clamp diode Vcl1, Vcl2 and the clamp capacitor Ccl1, Ccl2 are connected in series and connect an output of the respective clamp inductor L1, L2 with the neutral point NP. The clamp resistor Rcl1, Rcl2 directly connects the clamp capacitor Ccl1, Ccl2 with the respective output DC+, DC- of the DC-link 20a.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A multi-phase multi-level converter (10) for converting a multi-phase input voltage from an electrical grid into a multi-phase multi-level output voltage to be supplied to a load, the converter comprising:
a transformer (12) with a primary side connected to the electrical grid;
at least three floating cells (16a, 16b, 16c) connected to the secondary side of the transformer (12);
wherein each floating cell (16a, 16b, 16c) comprises a rectifier (18a, 18b, 18c), a DC link (20a, 20b, 20c) and an inverter (22a, 22b, 22c), wherein the rectifier (18a, 18b, 18c) is supplied by the secondary of the transformer (12), the DC link (20a, 20b, 20c) interconnects the rectifier (18a, 18b, 18c) and the inverter (22a, 22b, 22c), and the inverter (22a, 22b, 22c) generates a phase of the multi-phase multi-level output voltage;
wherein the inverter (22a, 22b, 22c) comprises a first inverter leg (24a, 24b, 24c) and a second inverter leg (26a, 26b, 26c) connected in H-bridge topology;
wherein the first inverter leg (24a, 24b, 24c) and the second inverter leg (26a, 26b, 26c) are active neutral point clamped inverter legs.

2. The converter (10) of claim 1,
wherein a secondary side of the transformer (12) supplies each floating cell (16a, 16b, 16c) with a 12 pulse voltage.

3. The converter (10) of claim 1 or 2,
wherein the DC link (20a, 20b, 20c) comprises two capacitors connected in series for providing a positive DC voltage (DC+), a neutral point connection (NP) and a negative DC voltage (DC-) to the inverter (22a, 22b, 22c).

4. The converter (10) of one of the preceding claims,
wherein outputs (50) of the first inverter legs (24a, 24b, 24c) of the floating cells (16a, 16b, 16c) are connected to a common point (28).

5. The converter (10) of one of the preceding claims,
wherein outputs (50) of the second inverter legs (26a, 26b, 26c) of the floating cells (16a, 16b, 16c) provide output phases (U', V', W') connectable to the load.

6. The converter (10) of one of the preceding claims,
wherein at least one of the first inverter leg (24a, 24b, 24c) and second inverter leg (26a, 26b, 26c) comprises a first inverter cell (54) with two upper semiconductor switch elements (V1, Vnp1) connecting a positive output (DC+) of the DC-link with a neutral point (NP) and two lower semiconductor switch elements (V4, Vnp2) connecting a negative output (DC-) of the DC-link (20a, 20b, 20c) with the neutral point (NP);
wherein the first inverter cell is adapted for generating a three level output voltage between an upper output (56a) and a lower output (56b) located between the two upper semiconductor switch elements (V1, Vnp1) and the two lower semiconductor switch elements (V4, Vnp2).

7. The converter (10) of claim 6,
wherein each semiconductor switch element (V1, V4, Vnp1, Vnp2) of the first inverter cell comprises two distinct semiconductor switches.

8. The converter (10) of one of the preceding claims,
wherein at least one of the first inverter leg (24a, 24b, 24c) and second inverter leg (26a, 26b, 26c) comprises a second inverter cell (58) with an upper semiconductor switch element (V21) connecting an upper output (56a) of a first inverter cell (56a) of the inverter leg with a phase capacitor (Cf) and a lower semiconductor switch element (V32) connecting a lower output (56b) of a first inverter cell (54) of the inverter leg with the phase capacitor (Cf).

9. The converter (10) of one of the preceding claims,
wherein at least one of the first inverter leg (24a, 24b, 24c) and the second inverter leg (26a, 26b, 26c) comprises a third inverter cell (60) with two semiconductor switch elements (V22, V31) connected in series and connected in parallel to a phase capacitor (Cf).

10. The converter (10) of one of the preceding claims,
wherein the first inverter leg (24a, 24b, 24c) and the second inverter leg (26a, 26b, 26c) comprises IGBTs as semiconductor switches.

11. The converter (10) of one of the preceding claims,
wherein a clamping circuit (62) is interconnected between the DC-link (20a, 20b, 20c) and the inverter (22a, 22b, 22c), such that semiconductor switches of the first and/or second inverter leg turn-on with limited current gradient.

12. The converter (10) of claim 11,
wherein the clamping circuit (62) comprises a clamp inductor (L1, L2) interconnecting an output (DC+, DC-) of the DC-link (20a, 20b, 20c) with the first inverter leg (24a, 24b, 24c) and/or second inverter leg (26a, 26b. 26c);
wherein the clamping circuit (62) comprises a clamp diode (Vcl1, Vcl2) and a clamp capacitor (Ccl1, Ccl2) connected in series and connecting an output of the clamp inductor (L1, L2) with the neutral point (NP).

13. The converter (10) of claim 12,
wherein the clamping circuit (62) comprises a clamp resistor (Rcl1, Rcl2) directly connecting the clamp capacitor (Ccl1, Ccl2) with the output (DC+, DC-) of the DC-link (20a, 20b ,20c).

14. The converter (10) of one of claims 11 to 13,
wherein the clamping circuit (62) comprises two clamp inductors (L1, L2) interconnecting the first inverter leg (24a, 24b, 24c) and the second inverter leg (26a, 26b, 26c) with the positive output (DC+) and the negative output (DC-) of the DC-link (20a, 20b, 20c);
wherein the clamping circuit (62) comprises a clamp diode (Vcl1, Vcl2, a clamp capacitor (Ccl1, Ccl2) and/or a clamp resistor (Rcl1, Rcl2) for each positive and negative half (66a, 66b) of each of the first inverter leg (24a, 24b, 24c) and second inverter leg (26a, 26b, 26c).
